Europäisches Patentamt

European Patent Office

Office européen des brevets

(11) Publication number : **0 488 854 A2**

## (12) EUROPEAN PATENT APPLICATION

(21) Application number : **91403110.9**

(51) Int. Cl.$^5$ : **G11B 11/10**

(22) Date of filing : **19.11.91**

(30) Priority : **27.11.90 JP 323801/90**
**21.01.91 JP 19210/91**

(43) Date of publication of application :
**03.06.92 Bulletin 92/23**

(84) Designated Contracting States :
**DE FR GB**

(71) Applicant : **Shin-Etsu Chemical Co., Ltd.**
**6-1, Otemachi 2-chome**
**Chiyoda-ku Tokyo 100 (JP)**

(72) Inventor : **Tawara, Yoshio**
**26-26-405, Kurosuda, Modori-ku**
**Yokohama-shi, Kanagawa-ken (JP)**
Inventor : **Tokunaga, Katsushi**
**9-2-18, Arima, Miyamae-ku**
**Kawasaki-shi, Kanagawa-ken (JP)**

Inventor : **Shimizu, Yoshiaki**
**1914-1-201, Shomosakunobe, Takatsu-ku**
**Kawasaki-shi, Kanagawa-ken (JP)**
Inventor : **Sakaguchi, Susumu**
**3-28-4, Utsukushigaoka, Midori-ku**
**Yokohama-shi, Kanagawa-ken (JP)**
Inventor : **Ejima, Seiki**
**1485-6, Haraichi**
**Annaka-shi, Gunma-ken (JP)**
Inventor : **Fukuda, Kunio**
**259-406, Shimosakunobe, Takatsu-ku**
**Kawasaki-shi, Kawasaki-ken (JP)**
Inventor : **Arai, Shigeru**
**2-11-6, Higashi, Yachiyodai**
**Yachiyo-shi, Chiba-ken (JP)**

(74) Representative : **Armengaud, Alain et al**
**Cabinet ARMENGAUD AINE 3, Avenue**
**Bugeaud**
**F-75116 Paris (FR)**

(54) Method for the preparation of a magneto-optical recording medium.

(57) An improvement is obtained in the stability of a magneto-optical recording medium having a multilayered structure consisting of a transparent substrate plate of, for example, a polycarbonate resin, and layers successively formed on one surface of the substrate including a first dielectric layer, magnetic recording layer, second dielectric layer and metallic reflecting layer each deposited by the sputtering method. Different from conventional methods for providing the recording medium with a protecting coating layer of, for example, an ultraviolet-curable coating composition, the protecting layer according to the invention is formed by the sputtering method without taking the recording medium out of the sputtering chamber nor introducing atmospheric air into the sputtering chamber by using a specified target material to form a sputtering-deposited layer of a specified chemical composition.

# FIG. I

EP 0 488 854 A2

Jouve, 18, rue Saint-Denis, 75001 PARIS

## BACKGROUND OF THE INVENTION

The present invention relates to a method for the preparation of a magneto-optical recording medium or, more particularly, to an efficient and reproducible method for the preparation of a magneto-optical recording medium having a high recording sensitivity and capable of giving regenerative signals of a large C/N ratio along with very high chemical and thermal stability.

Along with the progress in recent years toward an information-predominated society, magneto-optical recording media are highlighted as a rewritable signal-recording and -regenerating medium. A magneto-optical recording medium in general has a multilayered structure consisting of a substrate plate of a transparent material such as a polycarbonate resin and a polyolefin resin and layers successively formed on one surface of the substrate including a first dielectric layer, a magnetic recording layer, a second dielectric layer and a reflecting layer, of which the reflecting layer is sometimes omitted. Each of these layers is formed usually by the method of sputtering by holding the substrate plate in a sputtering chamber in vacuum or under reduced pressure to face a target of the respective material of the layer to be deposited by applying a suitable voltage between the electrodes.

Known materials of the sputtering target for forming the dielectric layer include, for example, silicon nitride, silicon carbide and the like as well as hydrogen-containing silicon nitride, silicon carbide, silicon carbide nitride and the like. The magnetic recording layer is formed by using a target of an amorphous rare earth-containing alloy such as TbFe, TbFeCo, GdTbFe and the like. The reflecting layer is formed by depositing a thin layer of a metal such as aluminum, copper and the like.

A problem in such a magneto-optical recording medium is that the plastic resins forming the substrate plate, of which one of the surfaces is exposed bare, are not quite satisfactory in respect of the hardness, abrasive resistance and resistance against chemicals and moisture so that the exposed surface of the substrate plate is sometimes subject to scratches or surface defects due to the attack of the environment resulting in regeneration of signals with a low C/N ratio. Similar problems are caused when the recording medium is provided with a metallic reflecting layer as the topmost layer of the sputtering-deposited layered structure left bare. In addition, this problem of environemntal attack also cannot be disregarded on the peripheral side surface of the recording medium where a cross section of the multilayered structure is exposed. When the recording medium has a form of an annular disk with a center opening, the peripheral side surface here implied of course includes not only the outer peripheral side surface but also the inner peripheral side surface facing the center opening.

It is a conventional procedure accordingly that the magneto-optical recording medium prepared by sputtering-deposition of the layers on one surface of the substrate plate is taken out of the sputtering chamber and the exposed surface of the substrate plate is coated with a coating composition containing an ultraviolet-curable resin followed by the irradiation with ultraviolet light so as to cure the coating layer to form a protecting film. Similar coating treatment can be undertaken on the exposed surface of the metallic reflecting layer as well as on the peripheral side surfaces, if necessary.

The above mentioned coating treatment of the exposed surfaces of a magneto-optical recording medium cannot be free from several problems and disadvantages. Firstly, the recording medium taken out of the sputtering chamber is subject to inadvertent mechanical damages such as scratches and eventual deposition of dusts on the surface resulting in uneven coating with an ultraviolet-curable coating composition to cause an increase in the bit-error rate in the use of the recording medium. In addition, ultraviolet-curable resins generally have relatively poor mechanical strengths, thermal resistance and resistance against chemicals and moisture.

## SUMMARY OF THE INVENTION

The present invention accordingly has an object to provide an improved magneto-optical recording medium, which has a multilayered structure successively consisting of a transparent substrate plate, a first dielectric layer, a magnetic recording layer and a second dielectric layer with or without a metallic reflecting layer formed on the second dielectric layer and provided with a protecting coating layer on the exposed surface, free from the above described problems and disadvantages relative to the process for the formation of the protecting coating layer.

Thus, the present invention provides an improvement, in the method for the preparation of a surface-protected magneto-optical recording medium having a multilayered structure successively consisting of a transparent substrate plate, a first dielectric layer, a magnetic recording layer and a second dielectric layer with or without a metallic reflecting layer formed on the second dielectric layer and provided with a protecting coating layer on at least a part of the exposed surface by a process comprising the steps of (a) preparing a magneto-optical recording medium by the successive deposition, on one surface of the transparent substrate plate, of a first dielectric layer, a magnetic recording layer and a second dielectric layer with or without a metallic reflecting layer on the second dielectric layer by the method of sputtering in an atmosphere of a reduced pressure inside of a sputtering chamber and (b) then forming a protecting coating layer on the exposed surface of the magneto-optical recording medium, which improvement comprises conducting the step (b) for the formation of a protecting coating layer on the exposed surface of the magneto-optical recording medium by the method of sputtering on the surface of the recording medium kept inside of the sputtering chamber without substantial introduction of atmospheric air thereinto, the target material for the sputtering being selected from the group consisting of silicon, tin oxide, silicon nitride, boron nitride, silicon carbide, titanium dioxide, indium-tin oxide, zinc oxide, silicon dioxide, calcium fluoride, magnesium fluoride, hydrogen-containing silicon nitride, hydrogen-containing boron nitride, hydrogen-containing silicon carbide and hydrogen-containing silicon carbide nitride.

## BRIEF DESCRIPTION OF THE DRAWING

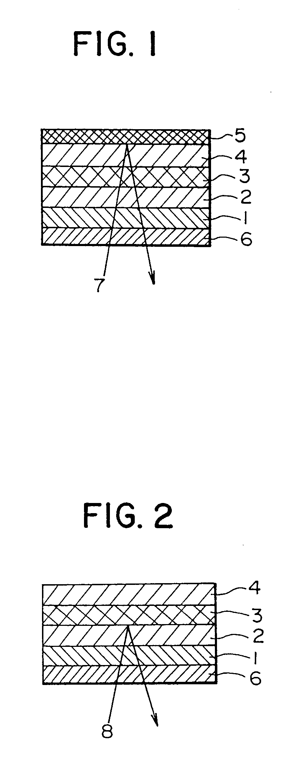

Figure 1 is a schematic cross sectional view of the multilayered structure of the surface-protected magneto-optical recording medium of the invention provided with a protecting coating layer on the exposed surface of the substrate plate. Figure 2 illustrates a similar schematic cross sectional view of another surface-protected magneto-optical recording medium of the invention by omitting the metallic reflecting layer 5 in the embodiment illustrated in Figure 1.

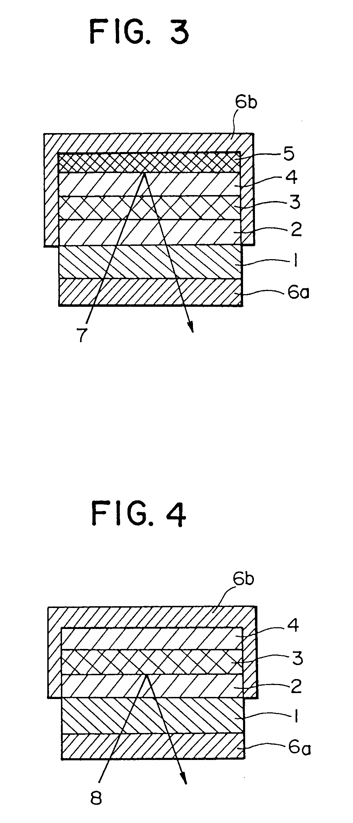

Figure 3 is a schematic cross sectional view of the multilayered structure of the surface-protected magneto-optical recording medium of the invention provided with a protecting coating layer not only on the exposed surface of the substrate plate but also on the exposed surface of the reflecting layer and the peripheral side surface. Figure 4 illustrates a similar schematic cross sectional view of another surface-protected magneto-optical recording medium of the invention by omitting the metallic reflecting layer 5 in the embodiment illustrated in Figure 3.

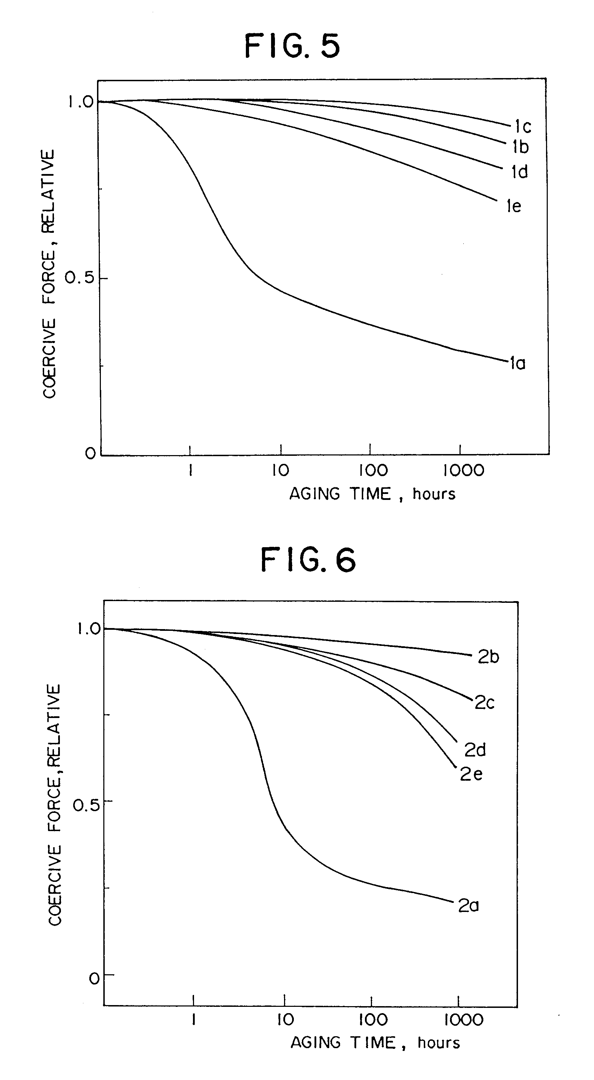

Figures 5 and 6 are each a graphic showing of the coercive force of the magnetic recording layer of magneto-optical recording media in the aging test as a function of the time for aging.

## DETAILED DESCRIPTION OF THE PREFERRED EMBODIMENTS

As is described above, the most characteristic feature of the improvement according to the present invention consists in the very unique and specific manner for the formation of the protecting coating layer on the exposed surface of the magneto-optical recording medium prepared by the successive sputtering deposition of layers on one surface of a transparent substrate plate in an atmosphere of a reduced pressure inside of a sputtering chamber. Namely, the protecting coating layer is formed by the sputtering method using a specific target material on the exposed surface of the recording medium, after the final step for the sputtering deposition of the layer which may be a metallic reflecting layer or a second dielectric layer when the metallic reflecting layer is omitted, still kept inside of the sputtering chamber without substantial introduction of atmospheric air thereinto. In this improved process, the magneto-optical recording medium as completed inside of the sputtering chamber need not be taken out of the sputtering chamber for the formation of the protecting coating layer so that the problems or drawbacks due to inadvertent mechanical damages, e.g., scratches, and deposition of dusts never have a chance to occur. Since the protecting coating layer is formed by the sputtering-deposition of a unique material as specified above, moreover, the protecting coating layer according to the invention has several advantages as compared with conventional coating layers formed by using an ultraviolet-curable coating composition including the firm adhesion to the substrate surface to be resistant against falling and higher mechanical strengths, hardness, chemical and thermal stability and moisture resistance to provide more reliable protection to the recording medium if not to mention the absence of the disadvantageous phenomenon of birefringence. In addition, the process according to the invention is more advantageous in respect of the productivity as an industrial process than the conventional process including the steps of spin-coating with an ultraviolet-curable coating composition and curing of the coating layer by the irradiation with ultraviolet light.

Figure 1 illustrates a typical multilayered structure of the surface-protected magneto-optical recording medium according to the invention. As in conventional magneto-optical recording media, a transparent substrate plate 1 made from a polycarbonate resin or polyolefin resin having a thickness of around 1.2 mm is provided on one surface successively with a first dielectric layer 2, a magnetic recording layer 3, a second dielectric layer 4 and a metallic reflecting layer 5. Each of these layers 2 to 5 is formed by the method of sputtering deposition using a target of the material corresponding to the respective deposited layer.

For example, each of the first and second dielectric layers 2, 4 is formed by the deposition of a dielectric inorganic material selected from the group consisting of silicon nitride, silicon carbide, hydrogen-containing silicon nitride, hydrogen-containing silicon carbide and hydrogen-containing silicon carbide nitride though not particularly limitative thereto. These layers 2,4 each have a thickness, preferably, in the range from 10 to 160 nm.

The magnetic recording layer 3 is formed from an amorphous alloy of a rare earth metal and a transition metal belonging to the VIIIth Group of the Periodic Table such as iron and cobalt as exemplified by the alloys of TbFe, TbFeCo and GdTbFe. This layer 3, usually having a thickness of 10 to 80 nm, is formed also by the method of sputtering following the formation of the first dielectric layer 2. Formation of this magnetic recording layer 3 is followed by the sputtering deposition of the second dielectric layer 4 in just the same manner as in the formation of the first dielectric layer 2. In the preparation of the magneto-optical recording medium illustrated in Figure 1, the step for the formation of the second dielectric layer 4 is followed by the sputtering deposition of the metallic reflecting layer 5 also by the method of sputtering using a target of a suitable metal such as aluminum, gold, silver and copper. This metallic reflecting layer 5 has a thickness usually in the range from 10 to 200 nm.

In the conventional process for the preparation of a surface-protected magneto-optical recording medium, the recording medium after the last step for the sputtering deposition of the metallic reflecting layer 5 is taken out of the sputtering chamber and subjected to the coating treatment with an ultraviolet-curable coating composition. In the improved process according to the invention, in contrast thereto, the recording medium as completed by the sputtering deposition of the metallic reflecting layer 5 is kept inside of the sputtering chamber to be subjected to the deposition of the protecting coating layer 6 also by the method of sputtering. It is essential that inside of the sputtering chamber is kept under a reduced pressure as in the course of the sputtering during the period between completion of the sputtering deposition of the metallic reflecting layer 5 and start of the sputtering deposition of the protecting coating layer 6 in order to ensure good adhesion of the protecting coating layer 6 to the surface of the substrate plate 1 and to prevent entering of any dust particles to be eventually deposited on the substrate surface. The protecting coating layer 6 usually has a thickness in the range from 10 to 400 nm. When the thickness is too small, no full effect of protection can be obtained as a matter of course while an excessively large thickness is undesirable because no further increase is obtained in the protecting effect rather with disadvantages in respect of the decreased productivity and performance of the recording medium.

As is mentioned before, the material forming the protecting coating layer 6 is selected from the group consisting of silicon, tin oxide, silicon nitride, boron nitride, silicon carbide, titanium dioxide, indium-tin oxide, zinc oxide, silicon dioxide, calcium fluoride, magnesium fluoride, hydrogen-containing silicon nitride, hydrogen-containing boron nitride, hydrogen-containing silicon carbide and hydrogen-containing silicon carbide nitride. These materials are generally very satisfactory in respect of the optical performance or transparency in the infrared to visible region of the wavelengths because, in the recording medium illustrated in Figure 1, the incident light beam 7 passes through the protecting coating layer 6 formed on the exposed surface of the substrate plate 1 to reach the metallic reflecting layer 5 to be reflected thereon and to go out of the recording medium again by passing through the protecting coating layer 6. In this regard, it was found that best results could be obtained when the protecting coating layer 6 formed from the above named substances has a refractive index in the range from 1.40 to 2.20. The refractive index of the protecting coating layer 6 is controllabe to fall within the above mentioned preferable range by using a target material of a suitable chemical composition, in particular, relative to the proportion of the constituent elements. Further, it is known that best results can be obtained when the amplitude reflectance of the coating layer is substantially equal to zero by satisfyibg the relationship of the equation $d = \lambda/2n$, in which n is the refractive index of the material of the film, $\lambda$ is the wavelength of the light used and $d$ is the thickness of the film.

Figure 2 illustrates a similar schematic cross sectional view of another magneto-optical recording medium according to the invention in which, however, the metallic reflecting layer 5 in the embodiment illustrated in Figure 1 is omitted. In this case, the light beam 8 incident on the surface of the sputtering-deposited protecting layer 6 on the surface of the substrate plate 1 is reflected on the magnetic recording layer 3. Namely, such a recording medium is prepared by conducting the sputtering deposition of the protecting layer 6 directly following the step of the sputtering deposition of the second dielectric layer 4 without taking the recording medium out of the sputtering chamber.

Figures 3 and 4 illustrate each a schematic cross sectional view similar to Figure 1 and Figure 2, respectively. In these embodiments, the sputtering-deposited protecting coating layer includes not only the layer 6a formed on the exposed surface of the substrate plate 1 but also the layer 6b formed on the opposite surface of the recording medium extending to envelope the exposed peripheral side surface of the multilayered structure. In the embodiment illustrated in Figure 3, the protecting layer 6b is formed on the surface of the metallic reflecting layer 5 while, in the embodiment illustrated in Figure 4 with omission of the metallic reflecting layer, the protecting layer 6b is formed on the surface of the second dielectric layer 4. It should be noted that, in the embodiment illustrated in Figure 4, the materials of the second dielectric layer 4 and the protecting coating layer 6b formed thereon can be the same one such as silicon nitride, silicon carbide, hydrogen-containing silicon nitride, hydrogen-containing silicon carbide and hydrogen-containing silicon carbide nitride. Accordingly, the second dielectric layer 4 and the protecting layer 6b in such a case are integral without interface. In other words, the protecting effect as desired is not decreased by omitting the protecting layer 6b at least on the surface of the second dielectric layer 4 or by forming the protecting layer 6b on the peripheral side surface of the multilayered structure only.

As is mentioned before, magneto-optical recording media are sometimes formed in the form of an annular disk having a center opening to facilitate exact mounting of the disk on the driving instrument. It is of course accordingly that the above mentioned peripheral side surface of the multilayered structure includes not only the outer peripheral side surface but also the inner peripheral side surface facing the center opening when the recording medium is in the form of such an annular disk.

In the following, examples are given to illustrate the improvement of the invention in more detail.

Example 1.

Five magneto-optical recording media, referred to as 1a, 1b, 1c, 1d and 1e hereinbelow, were prepared in the following manner. Thus, a substrate plate of a polycarbonate resin in the form of an annular disk having a thickness of 1.2 mm, outer diameter of 86.0 mm and a diameter of the center opening of 6.0 mm was provided, on one surface, successively with layers including a first dielectric layer of silicon nitride, referred to as SiN hereinbelow, having a thickness of 20 nm, a magnetic recording layer of an alloy TbFeCo having a thickness of 15 nm, a second dielectric layer of also SiN having a thickness of 50 nm and a reflecting layer of aluminum having a thickness of 50 nm each by the method of sputtering in a sputtering chamber.

The recording medium 1a thus prepared was taken out of the sputering chamber and spin-coated with an ultraviolet-curable coating composition on the exposed surface of the substrate plate followed by drying and irradiation with ultraviolet light so that a coating layer was cured to form a protecting coating layer having a thickness of 4 μm.

Each of the other four recording media 1b to 1e was provided on the exposed surface of the substrate plate with a protecting coating layer having a thickness of 300 nm made from boron nitride BN, SiN:H, hydrogen-containing silicon carbide SiC:H or hydrogen-containing silicon carbide nitride SiCN:H, respectively, by the method of sputtering deposition under a pressure of 0.005 Torr using a target of the material shown in Table 1 below directly following the step for the sputtering deposition of the metallic reflecting layer without introducing atmospheric air into inside of the sputtering chamber. Table 1 also shows the type of the atmospheric gas in each sputtering process and the refractive index of the protecting coating layer thus formed.

Each of the thus prepared, surface-protected magneto-optical recording media 1a to 1e was subjected to the measurements of the recording power and the C/N ratio under the conditions of: 1800 rpm revolution at a rotating radius r of 50 mm; 33.0% duty; and 3.70 MHz of the frequency. The results are shown in Table 2. Further, these recording media 1a to 1e were kept in an atmosphere of 85% relative humidity at a temperature of 80 °C and the coercive force of the magnetic layer was periodically measured during the aging period. Figure 5 of the accompanying drawing graphically shows the decrement in % in the coercive force relative to the initial value as a function of the length of the aging time.

## Table 1

| Recording medium | 1b | 1c | 1d | 1e |
|---|---|---|---|---|
| Composition of protecting layer | BN | SiN:H | SiC:H | SiCN:H |
| Target material | BN | Si | Si | Si |
| Gas composition, ratio by volume | $Ar:N_2$ = 1:1 | $Ar:N_2:H_2$ = 1:1:1 | $Ar:CH_4$ = 9:1 | $Ar:CH_4:H_2$ = 9:1:9 |
| Refractive index | 1.6 | 1.8 | 1.6 | 1.7 |

## T a b l e    2

| Recording medium | 1a | 1b | 1c | 1d | 1e |
|---|---|---|---|---|---|
| Recording power, mW | 10 | 8.0 | 7.5 | 8.0 | 8.0 |
| C/N ratio, dB | 54.0 | 54.5 | 56.0 | 55.0 | 55.5 |

Example 2.

Five magneto-optical recording media, referred to as 2a, 2b, 2c, 2d and 2e hereinbelow, were prepared in substantially the same manner as in Example 1 except that the polycarbonate substrate plate of 1.2 mm thickness had a form of an annular disk with an outer diameter of 86.0 mm and a diameter of the center opening of 6.0 mm and the thickness of the magnetic recording layer was 17 nm instead of 15 nm.

One of the thus perpared recording media 2a was taken out of the sputtering chamber and coated with an ultraviolet-curable coating composition on the exposed surfaces of the substrate plate and metallic reflecting layer as well as the inner and outer peripheral side surfaces of the multilayered structure followed by drying and irradiation with ultraviolet light to form protecting layers having a thickness of 4 $\mu$m on the surface of the substrate plate, 5 to 20 $\mu$m on the surface of the metallic reflecting layer and 2 to 5 $\mu$m on the peripheral side surfaces.

Each of the other four recording media 2b to 2e was provided on the exposed surfaces of the substrate plate and the metallic reflecting layer as well as on the inner and outer peripheral side surfaces with a protecting coating layer having a thickness of 207.4 nm made from SiN, $SnO_2$, $SnO_2$-$SiO_2$ or $In_2O_3$-$SnO_2$, respectively, by the method of sputtering deposition under a pressure of 0.005 Torr using a target of the material shown in Table 3 below directly following the step for the sputtering deposition of the metallic reflecting layer without introducing atmospheric air into inside of the sputtering chamber. Table 3 also shows the type of the atmospheric gas in each sputtering process and the refractive index of the protecting coating layer thus formed.

Each of the thus prepared surface-protected magneto-optical recording media 2a to 2e was subjected to the measurements of the bit-error rate and the C/N ratio under the same conditions as in Example 1 to give the results shown in Table 4 below. Further, these recording media 2a to 2e were kept in an atmosphere of 85% relative humidity at a temperature of 80°C and the coercive force of the magnetic layer was periodically measured during the aging period. Figure 6 of the accompanying drawing graphically shows the decrement in % in the coercive force relative to the initial value as a function of the length of the aging time.

## T a b l e    3

| Recording medium | 2b | 2c | 2d | 2e |
|---|---|---|---|---|
| Composition of protecting layer | SiN | $SnO_2$ | $SnO_2$-$SiO_2$ | $In_2O_3$-$SnO_2$ |
| Target material | Si | $SnO_2$ | Si-$SnO_2$ | $In_2O_3$-$SnO_2$ |
| Gas composition, ratio by volume | $Ar:N_2$ = 1:1 | $Ar:O_2$ = 100:1 | $Ar:O_2$ = 9:1 | $Ar:O_2$ = 9:1 |
| Refractive index | 2.0 | 2.0 | 1.6 | 2.0 |

## T a b l e 4

| Recording medium | 2a | 2b | 2c | 2d | 2e |
|---|---|---|---|---|---|
| Bit-error ratio, $\times 10^{-7}$ | 10 | 5.2 | 3.6 | 4.0 | 4.2 |
| C/N ratio, dB | 54.0 | 54.8 | 55.9 | 55.8 | 56.0 |

## Claims

1. In a method for the preparation of a surface-protected magneto-optical recording medium having a multilayered structure successively consisting of a transparent substrate plate, a first dielectric layer, a magnetic recording layer and a second dielectric layer with or without a metallic reflecting layer formed on the second dielectric layer and provided with a protecting coating layer on at least a part of the exposed surface by the process comprising the steps of (a) preparing a magneto-optical recording medium by the successive deposition, on one surface of the transparent substrate plate, of a first dielectric layer, a magnetic recording layer and a second dielectric layer with or without a metallic reflecting layer on the second dielectric layer by the method of sputtering in an atmosphere of a reduced pressure inside of a sputtering chamber and (b) then forming a protecting coating layer on the exposed surface of the magneto-optical recording medium, an improvement which comprises conducting the step (b) for the formation of a protecting coating layer on the exposed surface of the magneto-optical recording medium by the method of sputtering on the surface of the recording medium kept inside of the sputtering chamber without substantial introduction of atmospheric air thereinto, the target material for the sputtering being selected from the group consisting of silicon, tin oxide, silicon nitride, boron nitride, silicon carbide, titanium dioxide, indium-tin oxide, zinc oxide, silicon dioxide, calcium fluoride, magnesium fluoride, hydrogen-containing silicon nitride, hydrogen-containing boron nitride, hydrogen-containing silicon carbide and hydrogen-containing silicon carbide nitride.

2. The improvement according to claim 1 in which the protect0ing coating layer has a thickness in the range from 10 to 400 nm.

3. The improvement according to claim 1 in which the exposed surface of the magneto-optical recording medium on whcih the protecting coating layer is formed is the surface of the substrate plate opposite to the surface on which the first dielectric layer is formed.

4. The improvement according to claim 3 in which the exposed surface of the magneto-optical recording medium on whcih the protecting coating layer is formed additionally includes the surface of the metallic reflecting layer, when the metallic reflecting layer is formed, or the surface of the second dielectric layer, when the metallic reflecting layer is omitted, and the peripheral side surface of the multilayered structure.

# FIG. 1

```
5
4
3
2
1
6
```

7

# FIG. 2

```
4
3
2
1
6
```

8

# FIG. 3

# FIG. 4

# FIG. 5

# FIG. 6